Europäisches Patentamt

(19) European Patent Office

Office européen des brevets

(11) Numéro de publication : **0 112 225**
**B1**

(12) # FASCICULE DE BREVET EUROPÉEN

(45) Date de publication du fascicule du brevet :
26.04.89

(21) Numéro de dépôt : 83402305.3

(22) Date de dépôt : 30.11.83

(51) Int. Cl.⁴ : **A 23 L   1/182**

(54) **Grain de graminée amylacée et son procédé de préparation.**

(30) Priorité : **10.12.82 FR 8220697**

(43) Date de publication de la demande :
**27.06.84 Bulletin 84/26**

(45) Mention de la délivrance du brevet :
**26.04.89 Bulletin 89/17**

(84) Etats contractants désignés :
**AT BE CH DE FR GB IT LI LU NL SE**

(56) Documents cités :
**CH—A—   480 022**
**FR—A— 1 536 242**
**GB—A—   579 981**
**GB—A— 1 044 968**
**LU—A—   67 381**
**PATENTS ABSTRACTS OF JAPAN, vol. 6, no. 57 (C-98) [935], 14 avril 1982**
**Le dossier contient des informations techniques présentées postérieurement au dépôt de la demande et ne figurant pas dans le présent fascicule.**

(73) Titulaire : **Cohen, Albert**
**13 Avenue Fournier**
**F-92100 Clichy (FR)**

(72) Inventeur : **Cohen, Albert**
**13 Avenue Fournier**
**F-92100 Clichy (FR)**

(74) Mandataire : **Bourgognon, Jean-Marie et al**
**Cabinet Flechner 22, Avenue de Friedland**
**F-75008 Paris (FR)**

Jouve, 18, rue St-Denis, 75001 Paris, France

**Description**

La présente invention se rapporte aux grains de graminées amylacées et à leurs procédés de préparation, ces grains pouvant être entiers, concassés ou réagglomérés.

L'invention vise notamment les grains de maïs, les grains de blé et, tout particulièrement, les grains de riz.

L'invention sera illustrée dans ce qui suit sur l'exemple du riz.

Le riz nécessite une cuisson de 20 minutes environ pour être consommé.

On a cherché déjà à réduire cette durée de cuisson en proposant du riz précuit. Les qualités gustatives du riz précuit sont si médiocres qu'il n'a pas pu s'imposer sur le marché.

C'est ainsi qu'au GB-A-579981, on propose un riz sec ayant subi un traitement par l'eau bouillante de 8 à 10 minutes, tandis qu'au CH-A-880022, on propose un traitement par une solution de chlorure de sodium pendant 1 à 12 heures.

L'invention pallie ces inconvénients par un grain qui ne nécessite que moins de cinq minutes environ pour être cuit de manière à pouvoir être consommé, mais qui conserve ses qualités gustatives et dont la qualité nutritionnelle et vitaminique est améliorée.

Le grain de graminée amylacée suivant l'invention est défini à la revendication 1 pour les états contractants autres que AT.

Un riz non entièrement cuit est un riz dans lequel l'amidon n'a pas été encore dépolymérisé suffisamment. Tout consommateur sent immédiatement en le mangeant si un riz est cuit ou non. La partie non cuite mise en solution aqueuse iodée ne donne pas une coloration bleue.

Un riz hydrosorbé est un riz humide ayant admis de l'eau jusqu'à coeur. Sa teneur en eau est supérieure à 16 % en poids. Elle est notamment de 30 % ä 250 % environ.

Un riz gélifié en surface est un riz dont la couche extérieure ou coque mince est dépolymérisée, et est en phase humide. Le coeur est en compétition osmotique avec l'amidon libre détaché hors de la coque de sorte qu'il se crée des liaisons tendant à agglomérer cet amidon libre à la coque. Le riz ne colle plus.

Jusqu'ici les opérations d'hydratation à coeur ou hydrosorption et de dépolymérisation s'effectuaient en même temps, en cuisant le riz dans de l'eau à ébullition. L'invention repose sur l'idée de réaliser séparément ces deux opérations. On hydrosorbe en usine. Le consommateur n'a plus qu'à dépolymériser en cuisant le riz.

Le riz suivant l'invention passe donc les trois tests suivants :

a) On met 250 grammes de riz dans une étuve à 55 °C pendant 72 heures. On sort le riz de l'étuve. On le pèse. Il a perdu au moins 16 % et de préférence au moins 30 % de son poids. C'est un riz humide.

b) On trempe 20 grammes de riz dans 100 ml d'eau à 20 °C additionnée de 5 gouttes d'alcool iodé à 1 %. L'eau se colore en bleu-rosé. La coque donne de l'amidon dépolymérisé qui provoque la coloration.

c) On lave 20 grammes de riz en le faisant barboter dans une passoire par un jet d'eau à 20 °C (eau du robinet) ayant un débit de 6 litres/minute pendant 15 minutes en prenant soin de remuer les grains de temps en temps. On enlève ainsi la coque. On égoutte pendant 2 minutes. On broie le riz. On le met dans 100 ml d'eau à 20° C additionnée de 3 gouttes d'alcool iodé à 1 %. Il n'y a pas de coloration. Le coeur de grain n'est pas cuit.

Le riz suivant l'invention est de préférence ensaché en usine dans des sachets en matière imperméable à l'eau et vendu ainsi aux consommateurs qui n'ont plus qu'à le faire « cuire » pendant 5 minutes. On préfère des sachets en matière plastique.

Le procédé de préparation est défini à la revendication 3 ou, pour l'état contractant AT à la revendication 1.

On prépare du riz suivant l'invention en faisant subir à du riz décortiqué un choc thermique.

Par riz décortiqué, on entend du riz dont on a enlevé au préalable la balle. On peut donc traiter suivant l'invention du riz cargo, mais aussi des riz ayant subi d'autres traitements, par exemple du riz blanchi, du riz poli, du riz glacé, du riz huilé, etc.

Par choc thermique, on entend un traitement thermique bref par de l'eau chaude.

On choque le riz en le mettant en contact de 36 à 180 parties d'eau pour 100 parties en poids de riz. Le cas échéant, on peut opérer en présence de jusqu'à 300 parties d'eau, notamment pour des riz soufflés de pâtisserie.

Le choc consiste à mettre du riz à traiter dans de l'eau ayant une température maximale de 100 °C et à laisser le tout se refroidir dans des conditions telles que l'eau additionnée du riz ne reste à chaque température qu'une durée inférieure à celle qui provoque une gélatinisation complète ou qui donne un taux de gélatinisation donné, par exemple de 5 % en poids. Le refroidissement est suffisamment rapide pour éviter la gélatinisation complète.

Le riz ne doit rester que de 1 à 5 secondes en contact avec de l'eau à 100 °C ou de 10 à 50 secondes en contact avec de l'eau à plus de 70 °C.

On peut déterminer si les durées du choc thermique sont admissibles par les courbes de gélatinisation du riz et par la courbe de décroissance de température du riz choqué.

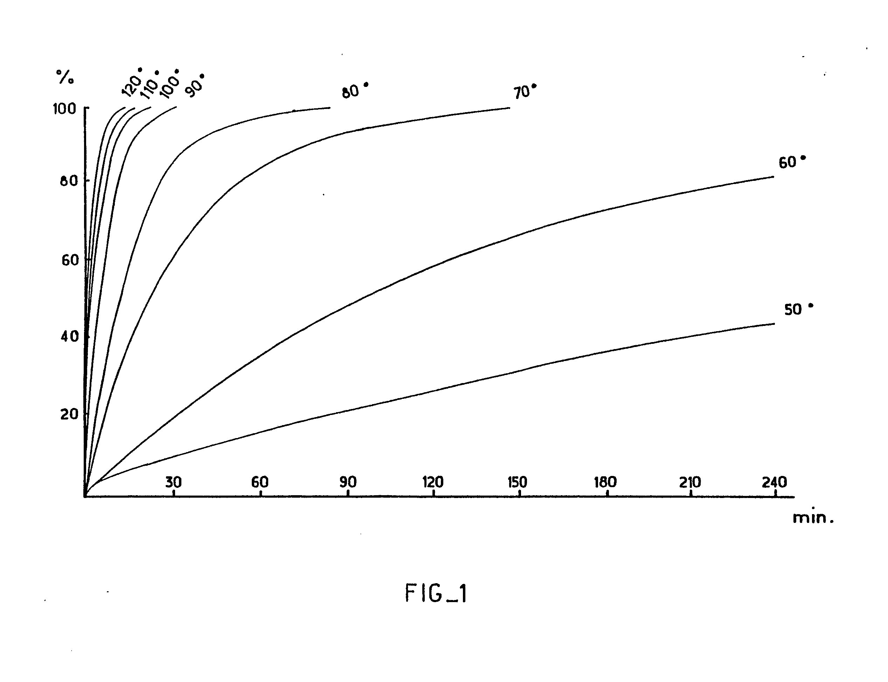

Une famille de courbes de gélatinisation du riz est représentée à la figure 1. On a porté en abscisses le temps en minutes et en ordonnées le pourcentage de gélatinisation. Les diverses courbes correspon-

EP 0 112 225 B1

dantes à des températures différentes.

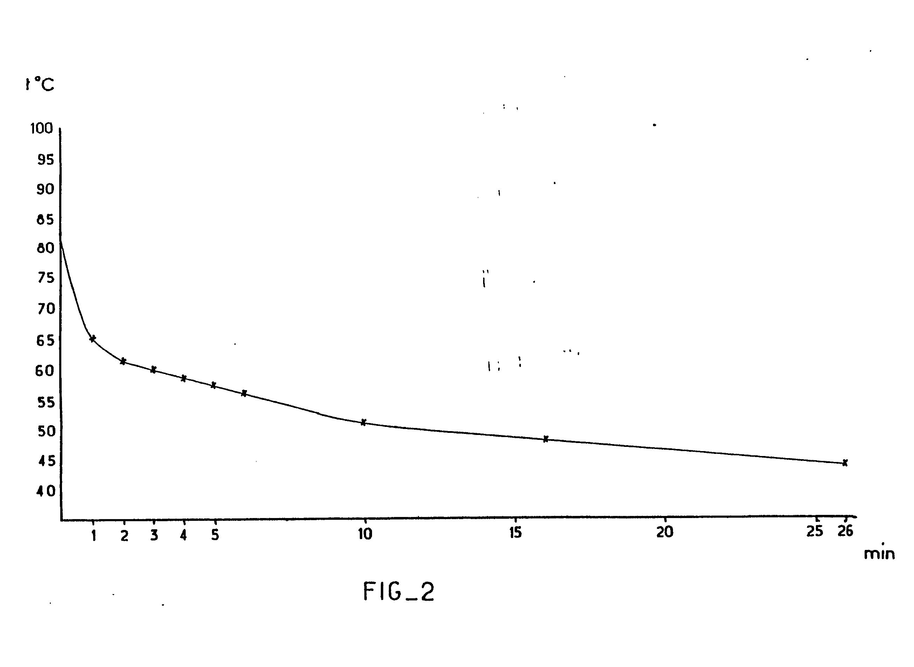

La figure 2 illustre une courbe de diminution de la température de 100 grammes de riz EMB 76477 dans 150 grammes d'eau portée initialement à une température de 80 °C dans un récipient fermé en aluminium de 500 ml de capacité.

A la figure 2, on voit, par exemple, que l'eau additionnée de riz reste 3 minutes à 60 °C ou à une température supérieure à 60 °C. En se reportant à la courbe 60° de la figure 1, on voit qu'en trois minutes le taux de gélatinisation est bien inférieur à 5 %, notamment inférieur à 1 %.

Il y a donc choc thermique et non pas cuisson. En procédant de la même façon pour chaque température, on peut vérifier que la gélification ne dépasse jamais la limite de 5 %.

Pour bref qu'il doive être, le choc doit être cependant suffisamment long pour obtenir le grain de riz suivant l'invention. On peut indiquer, à titre d'exemple, qu'il faut que la courbe de décroissance de la température soit telle que l'on reste au moins 1 heure à une température supérieure à 30 °C et, de préférence au moins 1 heure à une température supérieure à 40 °C et, de préférence au moins 3 à 4 minutes à une température supérieure à 55 °C.

Alors que, jusqu'ici, on chauffait du riz pour le faire cuire, dans un choc thermique on « le laisse refroidir » après l'avoir soumis à l'action d'eau suffisamment chaude, étant entendu que, pourvu que l'on reste dans le domaine de non gélatinisation, on pourrait rompre la monotonie de la courbe de décroissance de la température, par exemple en réchauffant brièvement.

De préférence on ne fait pas subir de choc thermique à un riz ayant une teneur en eau supérieure à 36 %.

On peut faciliter le choc thermique ou en abréger la durée en trempant d'abord le riz pendant 10 secondes à 2 heures dans de l'eau ayant une température de 10 à 30 °C environ jusqu'à ce qu'il ait absorbé moins de 36 % en poids d'eau et notamment environ 20 % d'eau, puis en le traitant à la vapeur ou étuvage (parboiled) toujours en faisant en sorte qu'il prenne moins de 36 % en poids d'eau. En général, on étuve de manière à ce que le riz prenne de 2 à 4 % d'eau en poids. On procède à l'étuvage pendant 5 minutes à 2 heures, notamment pendant 10 à 30 minutes, et de préférence pendant 15 minutes. Cet étuvage, entre 110 et 130 °C, de préférence sous pression (1 à 2 bar), a l'intérêt de donner également une aseptisation.

En trempant et/ou en étuvant on peut abréger la durée du choc thermique et/ou diminuer la température à laquelle il commence.

Les tests et exemples suivants illustrent l'invention.

Protocole, 1er test

1) Une cuillerée à soupe de riz du commerce cru est placée dans une moulinette, à l'état sec et broyée finement pendant quelques secondes. Le riz est placé broyé dans un premier verre étiqueté verre No. 1.

2) Une cuillerée à soupe de riz suivant l'invention, non cuit, est broyée au presse-ail et placée broyée dans un second verre étiqueté verre No. 2.

3) Une cuillerée à soupe de riz du commerce cru et sec est placée dans une casserole ordinaire, puis cuite selon les indications du fabricant, environ 15 minutes puis broyée au presse-ail, puis placée en totalité dans un troisième verre étiqueté verre No. 3.

4) Une cuillerée à soupe de riz suivant l'invention est placée dans une casserole ordinaire, additionnée d'un demi verre d'eau, puis cuite cinq minutes, puis broyée au presse-ail, puis placée dans un quatrième verre étiqueté également verre No. 4.

Durant la cuisson on a veillé à ne pas laisser brûler les riz en ajoutant de petites quantités d'eau adéquates. Les eaux résiduelles de cuisson sont jetées, seuls les riz sont retenus.

Les quatre verres sont additionnés de 50 ml d'eau froide du robinet puis remués.

L'agitateur est rincé et nettoyé entre chaque opération ; la moulinette nettoyée entre chaque opération, le presse-ail également.

Dans un deuxième temps, on complète les volumes des quatre verres avec de l'eau froide du robinet. Les verres sont emplis aux 3/4 puis placés devant une fenêtre en contre-jour de façon à permettre un examen visuel colorimétrique certain.

On les laisse reposer trente secondes, puis on dépose dans chaque verre quatre gouttes d'alcool iodé à 1 % Codex des pharmacies avec le compte-goutte codex.

Lecture des résultats du 1er test.

1) Le verre No. 2 contenant le riz suivant l'invention non cuit et broyé prend une teinte rosée opalescente caractéristique.

2) Le verre contenant le riz suivant l'invention cuit et broyé prend une coloration opalescente bleu pâle teintée franche, verre No. 4.

3) Le verre No. 1 contenant le riz du commerce broyé, sec et cru prend une coloration blanchâtre opalescente très légèrement bleutée.

Le verre No. 3 contenant le riz du commerce cuit et broyé prend une coloration bleutée.

Commentaires

Tout riz humide cuit subissant une transformation des polyholosides en amidon cuit colorera immanquablement l'eau en bleu en présence d'iode.

Seul le riz hydrosorbé humide et non cuit suivant l'invention colore l'eau en rose et non en bleu, en présence d'iode. Une fois cuit, il colore l'eau en bleu.

3

## Exemple 1

Avec un riz de marque E. M. B 76744 déjà étuvé (prétraité américain).

On dispose 100 grammes de riz dans un récipient de verre. On verse dessus 140 ml d'eau à 80 °C, on laisse l'hydrosorbtion spontanée se terminer sans autre soin particulier. Elle s'achève en deux heures à température ambiante 18-20°.

Ce riz cuit en 4 minutes. Il ne colle pas au récipient de cuisson. Dans l'essai de perte de poids par dessiccation, il perd 30 % de son poids en cinq heures à 55 °C.

## Exemple 2

Avec un riz Surinam longs grains naturel et non traité.

On dispose 100 grammes de riz dans un récipient de verre. On projette dessus 22 ml d'eau à 25 °C et le riz est remué pour être mélangé à l'eau, avec la précaution de ne pas briser les grains. On laisse tremper une demi-heure.

Ce récipient est fermé et porté dans une étuve pour y être étuvé à 110-120 °C pendant 20 minutes sous 1,3 bar. A la sortie de l'étuve, il est refroidi jusqu'à 40 °C en 20 minutes, puis arrosé de 150 ml d'eau à 90 °C. On laisse refroidir jusqu'à 20 °C. L'hydrosorbtion est obtenue entièrement en moins de 4 heures. On ensache le riz dans un sachet en polyéthylène imperméable à l'humidité. Trois semaines après, on ouvre le sachet et on fait cuire le riz en moins de cinq minutes.

## Exemple 3

On reprend l'exemple 2 sur du riz cargo, si ce n'est que l'on effectue le trempage pendant 8 heures. On obtient des résultats semblables.

**Revendications** (pour les Etats contractants : BE, CH, DE, FR, GB, IT, LI, LU, NL, SE)

1. Grain de graminée amylacée, notamment grain de riz hydrosorbé à coeur et incomplètement cuit, caractérisé en ce qu'il n'est gélifié qu'en surface, à une teneur en eau supérieure à 16 %, notamment de 30 à 250 % en poids, et colore en bleu-rosé de l'eau froide iodée et, après lavage au jet d'eau froide, ne colore plus de l'eau froide iodée.

2. Grain suivant la revendication 1, caractérisé en ce qu'il est mis dans un sachet scellé en une matière imperméable à l'humidité.

3. Procédé de préparation de grain de graminée amylacée, notamment de grain de riz, caractérisé en ce qu'il consiste à faire subir à du grain déjà décortiqué un choc thermique en mettant 100 parties en poids en contact pendant 1 à 50 secondes avec 36 à 180 parties d'eau ayant une température maximale de 100 °C en laissant le tout se refroidir à une vitesse de refroidissement telle que le taux de gélatinisation soit inférieur à un seuil donné, ce qui correspond à un temps de contact du riz de 1 à 5 secondes avec de l'eau à 100 °C et de 10 à 50 secondes avec de l'eau à plus de 70 °C.

4. Procédé suivant la revendication 3, caractérisé en ce que le seuil de taux de gélatinisation est de 5 % en poids.

5. Procédé suivant la revendication 4, caractérisé en ce qu'il consiste à faire précéder le choc thermique d'un trempage dans l'eau à une température de 10 à 30 °C pendant au moins 10 secondes.

6. Procédé suivant la revendication 4 ou 5, caractérisé en ce qu'il consiste à faire précéder le choc thermique d'un étuvage d'aseptisation pendant 5 minutes à 2 heures entre 110 et 130 °C.

**Revendications** (pour l'Etat contractant AT)

1. Procédé de préparation de grain de graminée amylacée, notamment de grain de riz, incomplètement cuit, hydrosorbé à cœur et gélifié qu'en surface, caractérisé en ce qu'il consiste à faire subir à du grain déjà décortiqué un choc thermique en en mettant 100 parties en poids en contact pendant 1 à 50 secondes avec 36 à 180 parties d'eau ayant une température maximale de 100 °C en laissant le tout se refroidir à une vitesse de refroidissement telle que le taux de gélatinisation soit inférieur à un seuil donné, ce qui correspond à un temps de contact du riz de 1 à 5 secondes avec de l'eau à 100 °C et de 10 à 50 secondes avec de l'eau à plus de 70 °C.

2. Procédé suivant la revendication 1, caractérisé en ce que le seuil de taux de gélatinisation est de 5 % en poids.

3. Procédé suivant la revendication 2, caractérisé en ce qu'il consiste à faire précéder le choc thermique d'un trempage dans l'eau à une température de 10 à 30 °C pendant au moins 10 secondes.

4. Procédé suivant la revendication 2 ou 3, caractérisé en ce qu'il consiste à faire précéder le choc thermique d'un étuvage d'aseptisation pendant 5 minutes à 2 heures entre 110 et 130 °C.

**Claims** (for the Contracting States : BE, CH, DE, FR, GB, IT, LI, LU, NL, SE)

1. Starchy graminaceous plant grain, particularly a rice grain, which is hydrosorbed to the core, which is imcompletely cooked, and which is gelled only on the surface, which has a water content greater than 16 %, particularly of 30 to 250 % by weight, which colours iodised cold water bluey-pink and which, after washing in a jet of cold water, no longer colours the iodised cold water.

2. Grain according to claim 1 characterized in that it is put in a sealed bag made of a material impermeable to moisture.

3. A process for preparing a starchy graminaceous plant grain, particularly a rice grain, characterized in that it comprises subjecting already husked rice to a thermal shock by putting 100 parts by weight of rice in contact with 36 to 180 parts of water having a temperature of between 100 and 40 °C for 1 or 50 seconds and leaving it all to cool at such a cooling rate that the gelling rate is below a given threshold, which corresponds to a time of contact of the rice with water at 100 °C of 1 to 5 seconds and with water having a temperature higher than 70 °C of 10 to 50 seconds.

4. The process of claim 3, characterized in that the threshold of the gelling rate is 5 % by weight.

5. The process of claim 4, characterized in that the thermal shock is preceded by soaking in water at a temperature of 10 to 30 °C for at least 10 seconds.

6. The process of claim 4 or 5, characterized in that the thermal shock is preceded by steaming for aseptisation for 5 minutes to 2 hours between 110 and 130 °C.

**Claims** (for the Contracting State AT)

1. A process for preparing a starchy graminaceous plant grain, particularly a rice grain, which is incompletely cooked, which is hydrosorbed to the core and which is gelled only on the surface characterized in that it comprises subjecting already husked rice to a thermal shock by putting 100 parts by weight of rice in contact with 36 to 180 parts of water having a temperature of between 100 and 40 °C for 1 or 50 seconds and leaving it all to cool at such a cooling rate that the gelling rate is below a given threshold which corresponds to a time of contact of the rice with the water at 100 °C of 1 to 5 seconds and with water having a temperature higher than 70 °C of 10 to 50 seconds.

2. The process of claim 1, characterized in that the threshold of the gelling rateis 5 % by weight.

3. The process of claim 2, characterized in that the thermal shock is preceded by soaking in water at a temperature of 10 to 30 °C for at least 10 seconds.

4. The process of claim 2 ou 3, characterized in that the thermal shock is preceded by steaming for aseptisation for 5 minutes to 2 hours between 110 and 130 °C.

**Patentansprüche** (für die Vertragsstaaten : BE, CH, DE, FR, GB, IT, LI, LU, NL, SE)

1. Stärkehaltiges Gramineenkorn, insbesondere Reiskorn, das bis ins Innere wasserfeucht und unvollständig gekocht ist, dadurch gekennzeichnet, daß es nur auf der Oberfläche geliert ist, einen Wassergehalt von mehr als 16 %, insbesondere 30 bis 250 Gew.-%, aufweist, kaltes Jodwasser blaurosa färbt, und nach Waschen mit einem kalten Wasserstrahl, kaltes Jod wasser nicht mehr anfärbt.

2. Korn nach Anspruch 1, dadurch gekennzeichnet, daß es sich in einem hermetisch verschlossenen Sack aus einem feuchtigkeitsundurchlässigen Material befindet.

3. Verfahren zur Herstellung eines stärkehaltigen Gramineenkorns, insbesondere eines Reiskorns, dadurch gekennzeichnet, daß man das bereits enthülste Korn einem thermischen Schock unterwirft, indem man 100 Gew.-Teile für 1 bis 50 Sekunden mit 36 bis 180 Teilen Wasser mit einer Maximaltemperatur von 100 °C in Kontakt bringt und das Ganze mit einer solchen Abkühlgeschwindigkeit abkühlen läßt, daß der Gelierungsgrad unter einem bestimmten Schwellenwert liegt, der einer Kontaktzeit des Reises von 1 bis 5 Sekunden mit Wasser von 100 °C und 10 bis 50 Sekunden mit Wasser von mehr als 70 °C entspricht.

4. Verfahren nach Anspruch 3, dadurch gekennzeichnet, daß der Schwellenwert des Gelierungsgrades 5 Gew.-% ausmacht.

5. Verfahren nach Anspruch 4, dadurch gekennzeichnet, daß man vor dem thermischen Schock während mindestens 10 Sekunden eine Wässerung in Wasser mit einer Temperatur von 10 bis 30 °C durchführt.

6. Verfahren nach Anspruch 4 oder 5, dadurch gekennzeichnet, daß man zur Entkeimung vor dem thermischen Schock eine Dampfbehandlung für 5 Minuten bis 2 Stunden zwischen 110 und 130 °C durchführt.

**Patentansprüche** (für den Vertragsstaat AT)

1. Verfahren zur Herstellung eines stärkehaltigen Gramineenkorns, insbesondere eines Reiskorns, das unvollständig gekocht, bis ins Innere wasserfeucht und auf der Oberfläche geliert ist, dadurch gekennzeichnet, daß man das bereits enthülste Korn einem thermischen Schock unterwirft, indem man 100 Gew.-Teile für 1 bis 50 Sekunden mit 36 bis 180 Teilen Wasser mit einer Maximaltemperatur von 100 °C in Kontakt bringt und das Ganze mit einer solchen Abkühlgeschwindigkeit abkühlen läßt, daß der Gelierungsgrad unter einem gegebenen Schwellenwert liegt, der einer Kontaktzeit des Reises von 1 bis 5 Sekunden mit Wasser von 100 °C und 10 bis 50 Sekunden mit Wasser von mehr als 70 °C entspricht.

2. Verfahren nach Anspruch 1, dadurch gekennzeichnet, daß der Schwellenwert des Gelierungsgrades 5 Gew.-% ausmacht.

3. Verfahren nach Anspruch 2, dadurch gekennzeichnet, daß man vor dem thermischen Schock für mindestens 10 Sekunden eine Wässerung in Wasser mit einer Temperatur von 10 bis 30 °C durchführt.

4. Verfahren nach Anspruch 2 oder 3, dadurch gekennzeichnet, daß man vor dem thermischen Schock zur Entkeimung eine Dampfbehandlung für 5 Minuten bis 2 Stunden zwischen 110 und 130 °C durchführt.

FIG_1

EP 0 112 225 B1

FIG_2